# EUROPEAN PATENT SPECIFICATION

(11) **EP 3 267 132 B1**
(45) Date of publication and mention of the grant of the patent: **25.03.2020**
(21) Application number: 17180270.5
(22) Date of filing: 07.07.2017
(51) Int. Cl.: F25D 21/08, F25B 5/02, F25D 21/14

(54) **REFRIGERATOR**
KÜHLSCHRANK
RÉFRIGÉRATEUR

(30) Priority: 08.07.2016 KR 20160086912
(43) Date of publication of application: 10.01.2018
(73) Proprietor: LG Electronics Inc., Yeongdeungpo-Gu Seoul 07336 (KR)
(72) Inventor: EOM, Changwon, 08592 Seoul (KR); LEE, Suwon, 08592 Seoul (KR); PARK, Chongyoung, 08592 Seoul (KR); LEE, Minhyuk, 08592 Seoul (KR); JHEE, Sung, 08592 Seoul (KR)
(74) Representative: Vossius & Partner Patentanwälte Rechtsanwälte mbB

(56) References cited:
- JP-A- H03 274 370
- JP-A- S60 228 876
- JP-U- S55 114 473
- KR-A- 20130 070 309
- US-A- 2 199 245
- US-A- 4 150 551
- Alienergy: "orABSORPTION & REFLECTION", , 31 December 2015 (2015-12-31), XP055411578, Retrieved from the Internet: URL:http://www.alienergy.org.uk/wp-content /uploads/2015/01/absorption_and_reflection .pdf [retrieved on 2017-09-29]

## Description

### BACKGROUND

The present invention relates to a refrigerator.

A refrigerator is an appliance for keeping food at refrigerating and freezing temperature.

A refrigerator includes an evaporating chamber for cooling air at low temperature in the refrigerator and an evaporator that is a part of the refrigeration cycle is disposed in the evaporating chamber. Further, an evaporation pan is disposed under the evaporator to collect frost or ice separated from the surface of the evaporator in a defrosting process.

A sheath heater is coupled to the bottom of the evaporator and includes an electric wire, a cold pin with an end connected to the end of the electric wire, and a heating wire connected to the other end of the cold pin. The cold pin is a non-heating member provided to prevent the coating of the electric wire from melting to high-temperature heat from the heating wire.

The cold pin is disposed on an edge of the lower end of the evaporator. That is, the cold pin is bent in an L-shape and disposed over the lower end of a side and the bottom of the evaporator.

During the defrosting process, ice on the evaporator melts and drops to the evaporator pan and the dropped ice is molten by heat radiated from the sheath heater.

Recently, superhydrophobic coating is applied to the surfaces of evaporators, so the ice on the evaporators is quickly molten and separated by heat from a heater. Accordingly, it is possible to achieve an effect of reducing the defrosting time.

However, as the defrosting time is reduced, a freezing operation is restarted without lumps of ice in the evaporation pan molten in some cases. Accordingly, water produced in the evaporator in the freezing operation drops to the ice in the evaporation pan and freezes.

In particular, the ice produced around the lower edge of the evaporator where the cold pin is disposed does not melt at a proper time, so the ice grows in the freezing operation.

### [Prior Art Document]

### [Patent Document]

Korean Patent Application Publication No. 2013-0070309(June 27, 2013)

### SUMMARY

The present invention is proposed to solve the problems described above.

That is, an object of the present invention is to provide a refrigerator that has a short defrosting time and allows frost or ice dropped in an evaporation pan to quickly melt.

In detail, an object of the present invention is to provide a refrigerator comprising an evaporating unit that allows ice dropped in the area under a cold pin of a heater, where heat is not radiated, to quickly melt within a defrosting time, and a refrigerator including the evaporating unit.
The object is solved with the features of the independent claim. The dependent claims relate to further aspects of the invention.

A refrigerator including an evaporating unit according to an embodiment of the present invention has the following effects.

First, since the evaporation pan is made of aluminum having relatively high thermal conductivity instead of steel, heat quickly transfers to the ice in the evaporation pan, so the ice can quickly melt.

Second, since the evaporation pan is made of aluminum and is coated with black pain or undergoes anodizing surface treatment, or a heat absorbing pad is attached to the evaporation pan, the evaporation pad can absorb radiant heat from the defrost heater as much as possible, so heat quickly transfers to the ice in the evaporation pan.

Third, since the heat discharged downward from the defrost heater on the bottom of the evaporator is absorbed by the evaporation pan, it is possible to prevent an inner case of the refrigerator that forms the bottom of the evaporator from melting.

### BRIEF DESCRIPTION OF THE DRAWINGS

FIG. 1 is a perspective view of a refrigerator including an evaporation pan according to an embodiment of the present invention.
FIG. 2 is a rear view of the refrigerator.
FIG. 3 is a view showing the configuration of a cooling cycle of the refrigerator according to an embodiment of the present invention.
FIG. 4 is a system diagram of the cooling cycle.
FIG. 5 is a block diagram illustrating control of the operation of the refrigerator according to an embodiment of the present invention.
FIG. 6 is a perspective view of an evaporating unit according to an embodiment of the present invention.
FIG. 7 is a front view of the evaporating unit.
FIG. 8 is a partial vertical cross-sectional view showing the start portion of a sheath heater according to an embodiment of the present invention.
FIG. 9 is a front perspective view of an evaporation pan according to an embodiment of the present invention.
FIG. 10 is a front perspective view of an evaporation pan according to an embodiment of the present invention.
FIG. 11 is an exploded perspective view of an evaporation pan according to another embodiment of the present invention.
FIG. 12 is an exploded perspective view of an evaporation pan according to another embodiment of the present invention.
FIG. 13 is a front perspective view of an evaporation pan according to another embodiment of the present invention.

### DETAILED DESCRIPTION OF THE EMBODIMENTS

Hereinafter, a refrigerator including an evaporation pan according to an embodiment of the present invention will be described in detail with reference to the accompanying drawings.

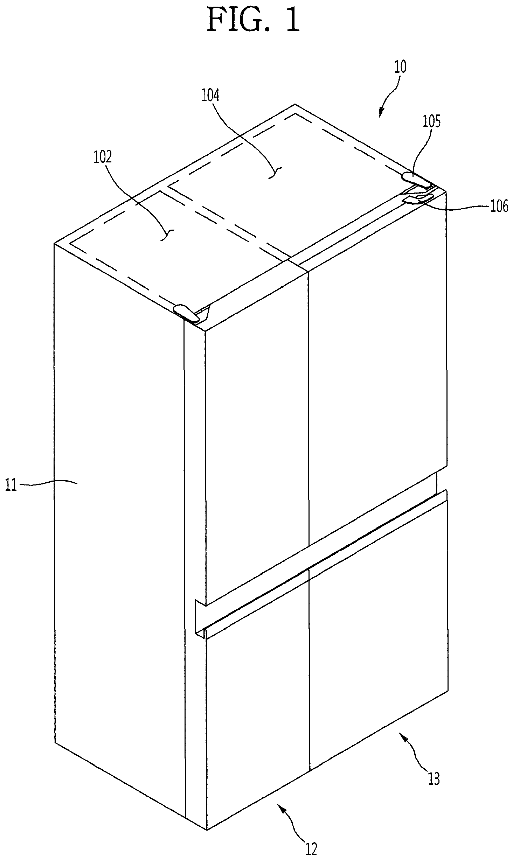

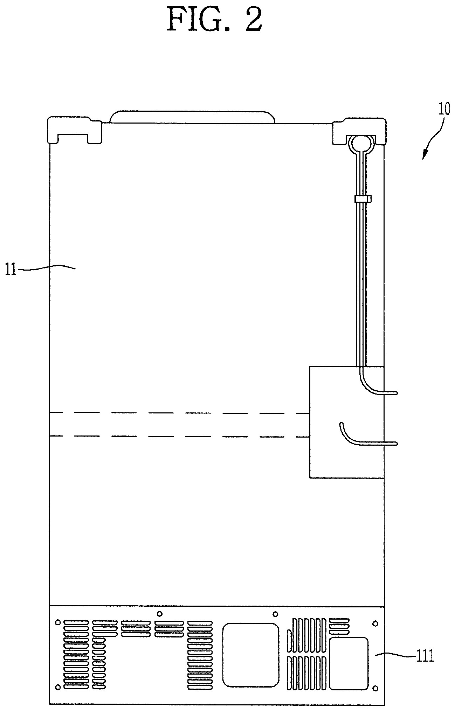

FIG. 1 is a perspective view of a refrigerator including an evaporation pan according to an embodiment of the present invention and FIG. 2 is a rear view of the refrigerator.

Referring to FIGS. 1 and 2, a refrigerator 10 according to an embodiment of the present invention may include a cabinet 11 having storage compartments therein, doors rotatably coupled to the front of the cabinet 11 to open/close the storage compartments, and a cooling cycle for cooling the storage compartments.

In detail, the storage compartments may include a refrigerator compartment 104 and a freezer compartment 102 and a machine room (not shown) for keeping the parts of the cooling cycle may be formed in the lower rear portion of the cabinet 11. The machine room is covered with a machine room cover 111 and the machine room cover 111 may have an external air inlet grills and exit grills.

The doors may include a refrigerator door 13 for opening/closing the refrigerator compartment 104 and a freezer door 12 for opening/closing the freezer compartment 102. In detail, the refrigerator door 13 and the freezer door 12 can be rotatably coupled to the cabinet 11 by hinges.

Depending on refrigerators, any one or both of the refrigerator door 13 and the freezer door 12 may be formed in a door-in-door type with doors arranged front and back.

In detail, a door-in-door type may include a first door rotatably coupled to the front of the cabinet 11 by a first hinge 105 to open/close the refrigerator compartment 103 or the freezer compartment 102 and a second door rotatably coupled to the front of the first door by a second hinge 106. The second door is in close contact with the front of the first door and can rotate in the same direction as the first door.

An opening may be formed through the first door and a storage space may be formed on the rear of the first door. Accordingly, it is possible to take out food from the storage space or put food into the storage space through the opening with the first door closed.

The second door selectively opens/closes the opening in front of the first door. In detail, when the first door is closed and the second door is open, the opening is open, so a user can put food into the storage space.

The freezer door 12 and the refrigerator door 13 may be the same as or larger than the other in width. In general, the refrigerator door 13 is formed larger in width than the freezer door 12.

Shelves and cases for keeping food may be provided inside the storage compartments and a plurality of storage members such as a door basket may be provided on the rears of the doors.

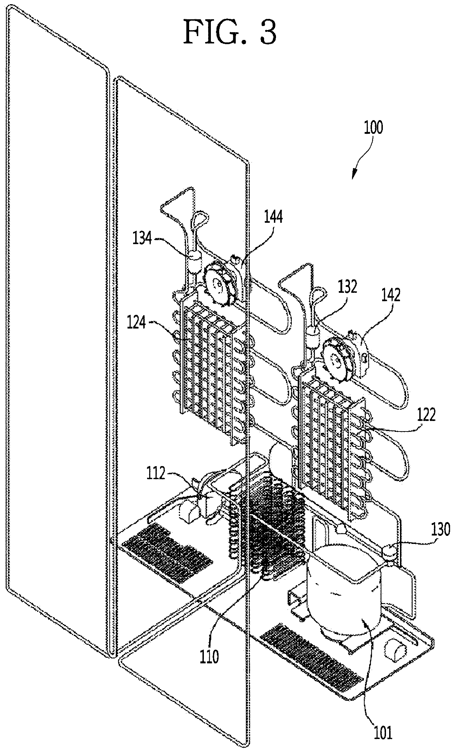

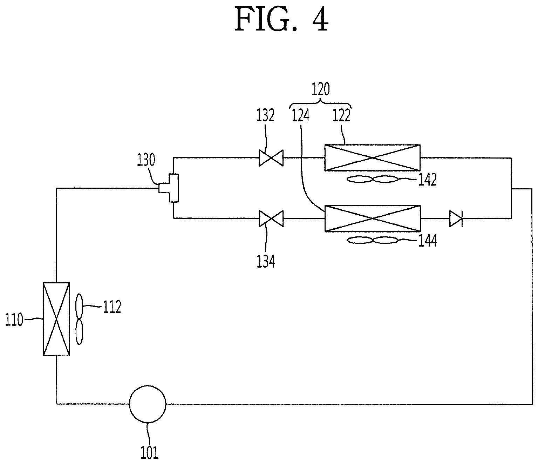

FIG. 3 is a view showing the configuration of a cooling cycle of the refrigerator according to an embodiment of the present invention and FIG. 4 is a system diagram of the cooling cycle.

Referring to FIGS. 3 and 4, a cooling cycle 100 of the refrigerator according to an embodiment of the present invention may include a compressor 101 that compresses a refrigerant into a high-temperature and high-pressure gaseous refrigerant, a condenser 110 that condenses the refrigerant from the compressor 101 into a high-temperature and high-pressure liquid refrigerant, a condenser fan 112 that blows internal air so that the internal air exchanges heat with the condenser 110, an expansion valve that expands the refrigerant from the condenser 110 into a low-temperature and low-pressure two-phase refrigerant, and an evaporator 120 that evaporates the two-phase refrigerant passing through the expansion valve into a low-temperature and low-pressure gaseous refrigerant.

In detail, the evaporator 120 may include a refrigerator evaporator 122 and a freezer evaporator 124 and the expansion valve may include a refrigerator expansion valve 132 and a freezer expansion valve 134. The refrigerator expansion valve 132 may be disposed at the inlet of the refrigerator evaporator 122 and the freezer expansion valve 134 may be disposed at the inlet of the freezer evaporator 124.

A refrigerator evaporator fan 142 and a freezer evaporator fan 144 are disposed close to the refrigerator evaporator 122 and the freezer evaporator 124, respectively, to make the cold air in the refrigerator compartment and the freezer compartment exchange heat with the refrigerator evaporator 122 and the freezer evaporator 124.

The refrigerant that has passed through the condenser 110 may be distributed to the refrigerator expansion valve 132 and the freezer expansion valve 134 by a 3-way valve 130.

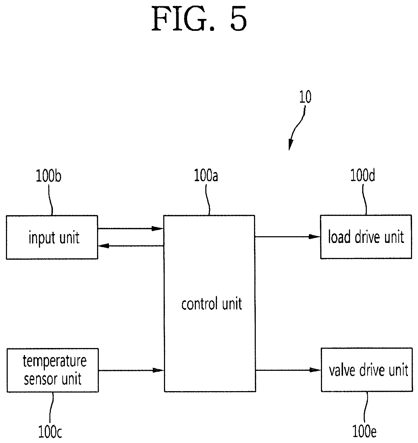

FIG. 5 is a block diagram illustrating control of the operation of the refrigerator according to an embodiment of the present invention.

Referring to FIG. 5, an operation control system for the refrigerator according to an embodiment of the present invention may include an input unit 100b that functions as a user interface, a temperature sensor unit 100c that senses the temperature of the refrigerator compartment 104 and the freezer compartment 102, a load drive unit 100d that drives the compressor 101 and the fans, a valve drive unit 1003 that controls the operation of the 3-way valve 130, and a control unit 100a that controls the load drive unit 100d and the valve drive unit 100e.

In detail, the control unit 100a receives input for an operating condition from the input unit 100b and the internal temperature of the refrigerator from the temperature sensor unit 100c. The control unit 100a controls the operation of the load drive unit 100d and the valve drive unit 100e in accordance with the operating condition inputted through the input unit 100b. Accordingly, the cooling cycle and the fans are operated by the load drive unit 100d and the 3-way valve 130 is operated by the valve drive unit 100e, whereby the flow direction of a refrigerant is determined.

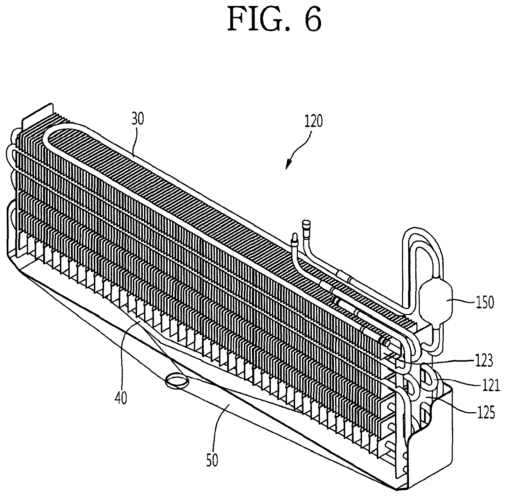

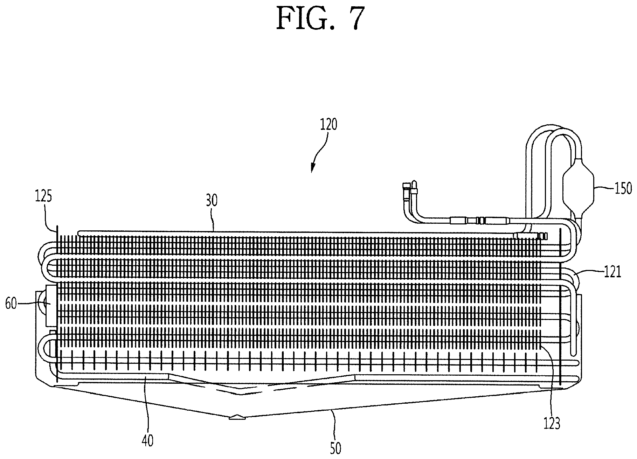

FIG. 6 is a perspective view of an evaporating unit according to an embodiment of the present invention and FIG. 7 is a front view of the evaporating unit.

The evaporator 120 of the evaporating unit to be described hereafter may be a refrigerator evaporator or a freezer evaporator.

Referring to FIGS. 6 and 7, an evaporating unit according to the present invention includes an evaporator 120 through which cold air and a refrigerant exchange heat with each other, an L-cord heater 30 that is disposed on the evaporator 120, a sheath heater 40 that is disposed under the evaporator 120, an evaporation pan 50 that collects frost or ice dropping from the surface of the evaporator 120, and a temperature sensor 60 that is mounted on the evaporator 120.

In detail, the evaporator 120, as shown in the figures, may include an evaporator pipe 121 through which the refrigerant that has passed through the evaporator expansion valve flows, a plurality of heat exchanger fins 123 that is arranged in the longitudinal direction of the evaporator pipe 121 and through which the evaporator pipe 121 passes, an accumulator 150 that is disposed at the outlet end of the evaporator pipe 121 to separate a liquid refrigerant and a gaseous refrigerant, and an evaporator frame 125 that holds the evaporator pipe.

In detail, the evaporator pipe 121 may be bent to make a meander line. The heat exchanger fins 123 are arranged in parallel in a line and the evaporator pipe 121 sequentially passes through the heat exchanger fins 123. Accordingly, the evaporator pipe 121 and the heat exchanger fins 123 exchange heat with each other through conduction and exchange heat with the cold air in an evaporating chamber.

The points of time to start and finish defrosting may be determined on the basis of the temperature sensed by the temperature sensor 60.

The L-cord heater 30 is disposed in a meander line along the upper portions of the front and rear and the top of the evaporator 120 and melts frost on the evaporator 120.

The sheath heater 40 may extend in a U-shape along the bottom and sides of the evaporator 120. In detail, a first end of the sheath heater 40 may extend down along a first side of the evaporator 120 and bend at the edge of the lower end of the evaporator 120. The sheath heater 40 bending at the edge of the lower end of the evaporator 120 extends to a second side of the evaporator 120 from the lower end of the evaporator 120, smoothly bends in a U-shape on the second side of the evaporator 120, and then extends to the first side of the evaporator 120. A second end of the sheath heater 40 may bend upward and then extend along the first side of the evaporator. Accordingly, both ends of the sheath heater 40 may be positioned at the same side of the evaporator 120.

The sheath heater 40 may extend at the lower end of the evaporator 120 and may bend one time or more.

According to this configuration, when a defrosting operation is started, the refrigerant flowing through the evaporator pipe 121 stops and power is supplied to the L-cord heater 30 and the sheath heater 40. Accordingly, the L-cord heater 30 and the sheath heater 40 are heated and discharge heat, so the ice on the evaporator 120 starts to melt.

In detail, when the ice on the evaporator 120 melts, it slides down and drops to the evaporation pan 50 due to gravity. The ice that has dropped in the evaporation pan 50 changes the phase into water, so it is collected into another evaporator pan on the bottom of the machine room or is discharged outside the refrigerator.

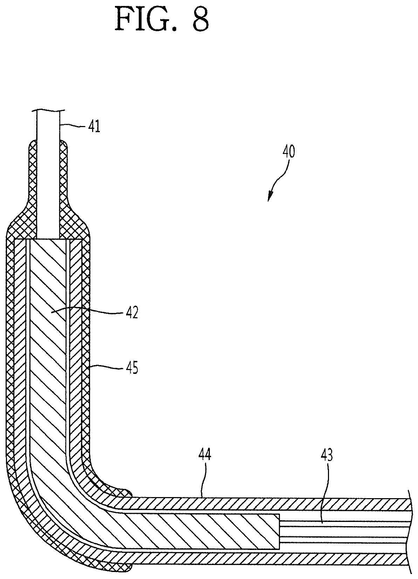

FIG. 8 is a partial vertical cross-sectional view showing the start portion of a sheath heater according to an embodiment of the present invention.

Referring to FIG. 8, the sheath heater 40 proposed as an example of a defrost heater according to an embodiment of the present invention has a start portion and an end portion that are bent in close contact with a side of the evaporator 120.

In the detail, the start portion and the end portion of the sheath heater 40 may be in close contact with any one outer side of the evaporator frame 125 forming the left and right sides of the evaporator 120.

In detail, the sheath heater 40 includes a lead wire 41, a cold pin 42 that has a first end connected to the end of the lead wire, a heating wire 43 connected to a second end of the cold pin 42, a heating pipe 44 that has the cold pin 42 and the heating wire 43 therein, and a thermal contraction tube 45 that covers the end portion of the heating pipe 44.

The cold pin 42 is composed of a vertical part and a horizontal part by bending at 90 degrees at a predetermined position. The vertical part of the cold pin 42 is in close contact with the outer side of the evaporator frame 125 and the horizontal part extends along the bottom of the evaporator 120.

When the heating wire 43 is directly connected to the lead wire 41, the coating of the lead wire 41 may melt or peel off due to heat from the heating wire 43. A non-heating section is formed by interposing the cold pin 42 to prevent this problem. That is, even though power is supplied through the lead wire 41, the cold pin 42 is not heated and only the heating wire 43 is heated.

Since the cold pin 42 and the heating wire 43 are disposed in the heating pipe 44 made of stainless steel (STS), they can be protected from external shock.

The outer sides of a portion of the lead wire 41 and the end portion of the heating pipe 44 are covered with the thermal contraction tube 45. The thermal contraction tube 45 contracts due to its properties when being heated. Accordingly, the joint of the lead wire 41 and the cold pin 42 is sealed to be watertight and prevent galvanic corrosion due to different kinds of metal. In other words, when the heating pipe 44 made of stainless steel and the heat exchanger pipe 121 made of aluminum are brought in direct contact with each other, corrosion may occur due to a potential difference between different kinds of metal. However, when the thermal contraction tube 45 covers the outer side of the heating pipe 44, corrosion due to a potential difference between different kinds of metal can be prevented.

Meanwhile, since the cold pin 42 forms the non-heating section, the defrosting ability is low at the edge of the lower end of the evaporator 120 where the cold pin 42 is positioned, relative to the other portion. Further, frost or ice in the evaporation pan 50 under the cold pin 42 may not completely melt during the defrosting operation.

In order to solve this problem, it is required to improve thermal conductivity and thermal radiation efficiency by changing the material and the color of the evaporation pan 50.

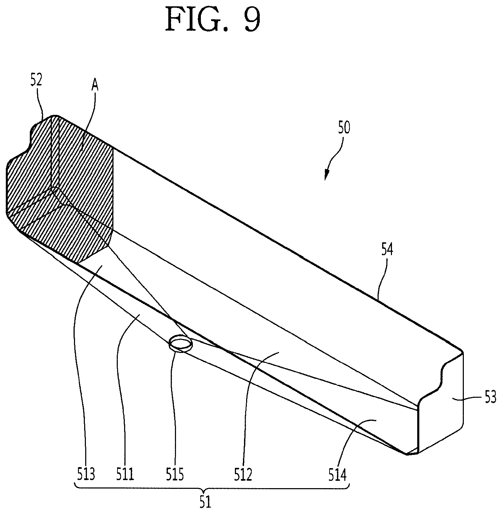

FIG. 9 is a front perspective view of an evaporation pan according to an embodiment of the present invention.

Referring to FIG. 9, an evaporation pan 50 according to an embodiment of the present invention is disposed on the bottom of the evaporating chamber, collects defrost water dropping from the evaporator 120, and discharges the defrost water outside the refrigerator during the defrosting operation.

In detail, the evaporation pan 50 may have a defrost water collection portion 51 having an open top, a left wall 52 extending upward from the left upper end of the defrost water collection portion 51, a right wall 53 extending upward from the right upper end of the defrost water collection portion 51, and a rear wall 54 extending upward from the rear upper rend of the defrost water collection portion 51.

In detail, the defrost water collection portion 51 may have a front side 511, a rear side 512, a left floor 513, a right floor 514, and a drain hole 515. The drain hole 515 may be formed at a position that bisects the width of the defrost water collection portion 51 or may be formed at a predetermined position closer to the left edge or the right edge from the bisecting position.

The left floor 513 and the right floor 514 are inclined to meet each other at the drain hole 515. Further, the front side 511 and the rear side 512 are also inclined to meet each other at the drain hole 515.

In other words, a side cross-section and a front cross-section of the defrost water collection portion 51 that are cut by a vertical plane passing through the drain hole 515 become narrower as they go to the bottom, thereby forming a conical or an inverse triangular shape that converges on the drain hole 515.

As described above, the defrost water collection portion 51 is inclined to converge on the drain hole 515, so defrost water dropping to the defrost water collection portion 51 is collected to the drain hole 515 and guided to a defrost water tray on the bottom of the machine room or discharged outside the refrigerator.

When the ice sliding down on the evaporator 120 drops to the defrost water collection portion 51 during the defrosting operation, it is preferable that the ice completely changes the phase into water and is discharged outside through the drain hole 515 before the defrosting operation is finished.

However, the ice dropping to the portion where the cold pin 42 of the sheath heater 40 is positioned, that is, to the left floor 513 or the right floor 514 of the defrosting water collection portion 51 may not completely melt. This is because the cold pin 42 is the non-heating portion, so the defrost water collection portion 51 cannot sufficiently absorb radiant heat. Accordingly, due to the insufficient absorption of radiant heat, the ice that has dropped to the defrost water collection portion 51 does not melt.

In order to solve this problem, it is required for the defrost heater, in detail, the evaporation pan 50 to absorb the radiant heat from the sheath heater 40 as much as possible within a predetermined time.

Further, it is also required to use a material having high thermal conductivity for the evaporation pan 50 so that the radiant heat absorbed by the evaporation pan 50 quickly transfers to the ice in the evaporation pan 50.

To this end, the evaporation pan 50 may be made of aluminum having high thermal conductivity. Since the thermal conductivity of aluminum is higher than that of steel, the melting speed of ice can be increased.

Further, it may be possible to apply a flat black coating on the inner side of the evaporation pan 50. When the inner side of the evaporation pan 50 is coated with a black paint, the thermal absorption amount is increased, as compared with when the evaporation pan 50 has a white surface. Therefore, the ice in the evaporation pan 50 more quickly melts.

The black coating may be partially applied only to the area A close to the side of the evaporation pan 50 where the cold pin 42 is positioned. The portion coated with the black paint may be defined as a coated portion or a black coated portion.

The black paint to be applied to the inner side of the evaporation pan 50 includes polyester resin of 40%, epoxy resin of 30%, a filler (barium) of 20%, and a filler (feldspar) of 10%.

Further, the coating thickness may be 30 *µ*m ∼ 70 *µ*m, preferably 30 *µ*m ∼ 70 *µ*m, and more preferably 50 *µ*m.

If the coating thickness of the coated portion is less than 30 *µ*m, the coating effect is reduced, so the possibility of poor coating is high and the ability of absorbing radiant heat is reduced. In contrast, when the coating thickness of the coated portion is larger than 70 *µ*m, an orange peel phenomenon occurs, that is, depressions and recessions such as the peel of an orange are made.

An evaporation pan 50 (Sample 1) made of aluminum (heat transfer coefficient: 0.22Kcal/Kg°C and thermal conductivity: 205.0 W/mK) and coated with a black paint on the entire inner side and an evaporation pan 50 (Sample 2) made of steel (heat transfer coefficient: 0.115Kcal/Kg°C and thermal conductivity 79.5 W/mK) and having a white inner side without being coated with a black paint were experimented in defrosting operations under the same conditions. Further, the temperatures of the left floors 513 of the evaporation pans 50 were measured after the defrosting operations. The results are shown in the following table.

**[Table 1]**

| Sample 1 | | Sample 2 | |
|---|---|---|---|
| First experiment | Second experiment | First experiment | Second experiment |
| 1.5°C | 2.6°C | 0.2°C | 0°C |

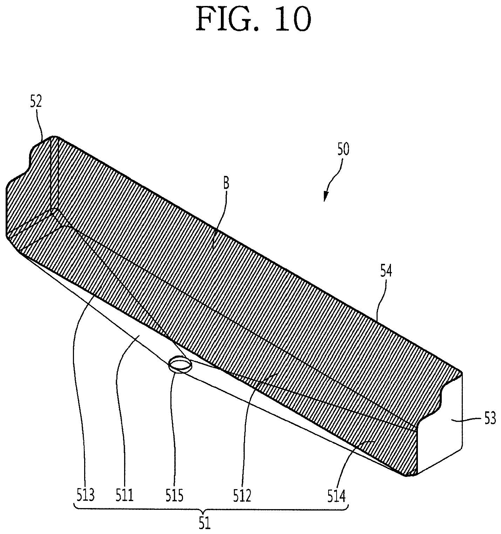

FIG. 10 is a front perspective view of an evaporation pan according to an embodiment of the present invention.

Referring to FIG. 10, a coated portion B may be formed throughout the inner side of the evaporation pan 50. Accordingly, the evaporation pan 50 can absorb more radiant heat, so the ice in the evaporation pan 50 can more quickly melt.

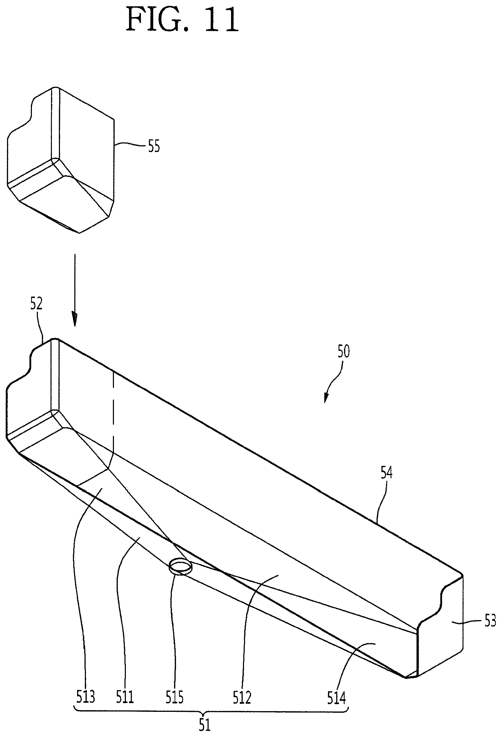

FIG. 11 is an exploded perspective view of an evaporation pan according to another embodiment of the present invention.

Referring to FIG. 11, this embodiment is characterized by attaching a heat absorbing pad 55 to the inner side of the evaporation pan 50 other than coating the inner side of the evaporation pan 50 in order to improve the ability of absorbing heat

In detail, the heat absorbing pad 55 may be partially attached only to the portion where the cold pin 42 is positioned.

Further, it may be possible to attach the heat absorbing pad 55 onto the a portion of the inner side of the evaporation pan 50 and apply black paint to the other inner side of evaporation pad 50 except for the portion where the heat absorption pad 55 is attached.

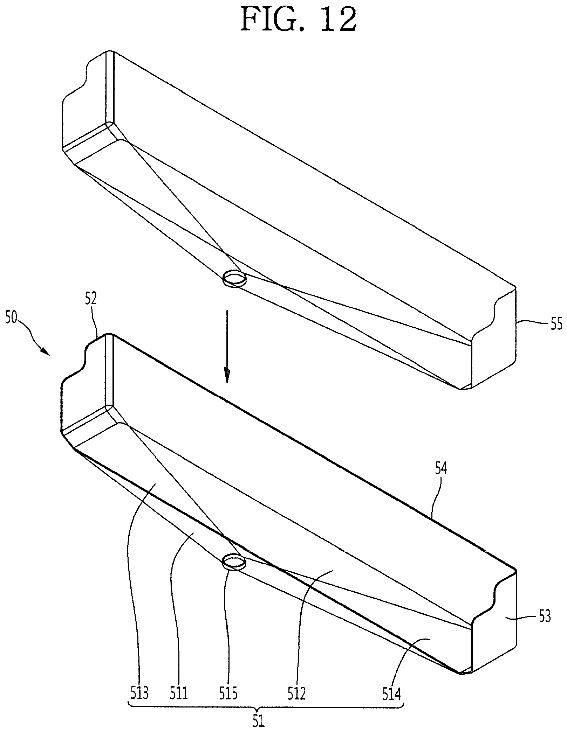

FIG. 12 is an exploded perspective view of an evaporation pan according to another embodiment of the present invention.

Referring to FIG. 12, the heat absorption pad 55 may be attached to the entire inner side of the evaporation pan 50.

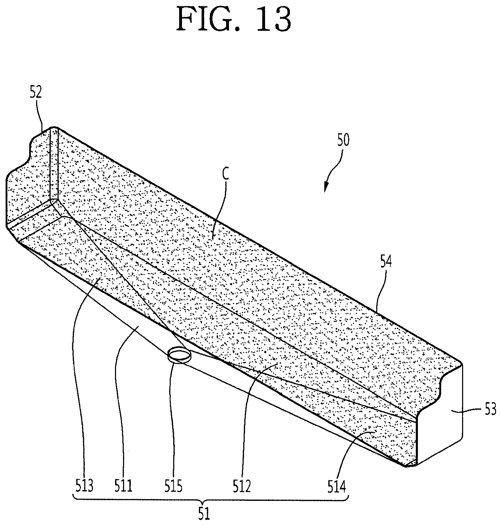

FIG. 13 is a front perspective view of an evaporation pan according to another embodiment of the present invention.

Referring to FIG. 13, anodizing surface treatment may be applied to the entire inner side of the evaporation pan or the portion corresponding to the cold pin 42.

In detail, it is possible to improve the ability of absorbing heat by apply anodizing surface treatment to the inner side of the evaporation pan 50 that absorbs heat. The portion to which anodizing surface treatment is applied may be defined as an anodizing surface-treated portion C.

In other words, it is possible to reduce the amount of heat energy that is reflected by the evaporation pan 50 by anodizing the inner side of the evaporation pan 50 with high surface roughness. The portion that is anodized may be defined as an anodized portion.

It should be understood that it may be possible to apply only any one of a black coating, a heat absorbing pad, or anodizing surface treatment, or partially apply combinations of the three methods to the inner side of the evaporation pan 50.

## Claims

1. A refrigerator comprising:
a cabinet (11) that includes storage compartments (102, 104) for keeping food and an evaporating chamber for producing cold air;
doors (12, 13) that are coupled to the cabinet to open and close the storage compartments(102, 104); and
an evaporator (120) that includes an evaporating unit for evaporation, the evaporating unit including an evaporator pipe (121), a frame (125) supporting the evaporator pipe, and a plurality of heat exchanger fins (123) through which the evaporator pipe passes;
an L-cord heater (30) that is disposed on the evaporator (120), a sheath heater (40) that is disposed under the evaporator (120) ;
a temperature sensor (60) that is mounted on the evaporator (120);
an evaporation pan (50) that is disposed under the evaporator (120) and configured to collect and discharge water or ice that drops from the evaporator (120),wherein the sheath heater (40) comprises: a lead wire (41);
a cold pin (42) that has a first end connected to the end of the lead wire (41) and provided to prevent a coating of the lead wire (41) from melting to high-temperature heat from a heating wire (43);
the heating wire (43) connected to a second end of the cold pin (42);
a heating pipe (44) that has the cold pin (42) and the heating wire (43) therein; and
a thermal contraction tube (45) that covers the end portion of the heating pipe (44);
**characterized in that**
a surface treatment portion (A, B, C, 55) for absorbing radiant heat from the sheath heater (40) is formed on the inner side of the evaporation pan (50) that corresponds at least to the area under the cold pin (42), and
wherein the surface treatment portion (A, B, C, 55) includes any one of a coated portion with black paint (A, B), a heat absorbing pad (55), and an anodized portion (C).

2. The refrigerator of claim 1, wherein the cold pin (42) is positioned at the edge of the lower end of the evaporator (120) .

3. The refrigerator of claim 1 or 2, wherein the black paint (A, B) includes polyester resin of 40%, epoxy resin of 30%, a barium filler of 20%, and a feldspar filler of 10%.

4. The refrigerator of any one of claims 1 to 3, wherein the coated portion has a thickness of 40 ∼ 60 *µ*m.

5. The refrigerator of any of claims 1 to 4, wherein the coated portion has a thickness of 50 *µ*m.

6. The refrigerator of any of claims 1 to 5, wherein the cold pin (42) is composed of a vertical part close contacted with the outer side of the evaporator frame (125) and a horizontal part extended along the bottom of the evaporator (120).

7. The refrigerator of any of claims 1 to 6, wherein the evaporation pan (50) is adapted to receive a lower portion of the evaporator (120) and the surface treatment portion (A, B, C, 55) is disposed to cover the cold pin (42) at at least one of left and right side of the evaporation pan (50).

8. The refrigerator of any of preceding claims, wherein at least a portion of the evaporation pan (50) including the surface treatment portion (A, B, C, 55) is made of aluminum.

9. The refrigerator of any of preceding claims, wherein the surface treatment portion (A, B, C, 55) is rougher than the other inner side of the evaporation pan (50).

10. The refrigerator of claim 1, wherein the anodized portion (C) has a rougher surface than the other inner side of the evaporation pan (50).

11. The refrigerator of claim 1, wherein the heat absorbing pad (55) is formed in a shape corresponding to the evaporation pan (50) and attached to the evaporation pan (50).

12. The refrigerator of claim 1, wherein the heat absorbing pad (55) is formed at an area corresponding to the cold pin (42) of the sheath heater (40), along side walls (52, 53) forming right and left side of the evaporation pan (50), a defrost water collection portion (51) forming a bottom of the evaporation pan (50), and a rear wall (54) supporting a rear of the evaporation pan (50).

13. The refrigerator of claim 12, wherein the heat absorbing pad (55) is formed along the inner side of the evaporation pan (50) to receive the cold pin (42) of the sheath heater (40).

## Patentansprüche

1. Kühlschrank, der aufweist:
einen Schrank (11), der Lagerfächer (102, 104) zum Aufheben von Lebensmitteln und eine Verdampfungskammer zur Erzeugung von kalter Luft umfasst;
Türen (12, 13), die mit dem Schrank gekoppelt sind, um die Lagerfächer (102, 104) zu öffnen und zu schließen; und
einen Verdampfer (120), der eine Verdampfungseinheit für die Verdampfung umfasst, wobei die Verdampfungseinheit eine Verdampferrohrleitung (121), einen Rahmen (125), der die Verdampferrohrleitung hält, und mehrere Wärmetauscherrippen (123), durch welche die Verdampferrohrleitung geht, umfasst;
eine L-Schleifenheizung (30), die auf dem Verdampfer (120) angeordnet ist, eine Mantelheizung (40), die unter dem Verdampfer (120) angeordnet ist;
einen Temperatursensor (60), der auf dem Verdampfer (120) montiert ist;
eine Verdunstungswanne (50), die unter dem Verdampfer (120) angeordnet ist und konfiguriert ist, um Wasser oder Eis zu sammeln, das von dem Verdampfer (120) tropft, wobei die Mantelheizung (40) aufweist: einen Anschlussdraht (41);
einen kalten Stift (42), von dem ein erstes Ende mit dem Ende das Anschlussdrahts (41) verbunden ist und der bereitgestellt ist, um zu verhindern, dass ein Überzug des Anschlussdrahts (41) bei Wärme hoher Temperatur von einem Heizdraht (43) schmilzt;
wobei der Heizdraht (43) mit einem zweiten Ende des kalten Stifts (42) verbunden ist;
ein Heizungsrohr (44), das den kalten Stift (42) und den Heizdraht (43) darin hat; und
ein thermisches Kontraktionsrohr (45), welches den Endabschnitt des Heizungsrohrs (44) bedeckt;
**dadurch gekennzeichnet, dass**
ein Oberflächenbehandlungsabschnitt (A, B, C, 55) zum Absorbieren von Strahlungswärme von der Mantelheizung (40) auf der Innenseite der Verdampfungswanne (50) ausgebildet ist, der wenigstens einem Bereich unter dem kalten Stift (42) entspricht, und
wobei der Oberflächenbehandlungsabschnitt (A, B, C, 55) einen mit schwarzer Farbe überzogenen Abschnitt (A, B), einen wärmeabsorbierenden Block (55) oder einen eloxierten Abschnitt (C) umfasst.

2. Kühlschrank nach Anspruch 1, wobei der kalte Stift (42) an dem Rand des unteren Endes des Verdampfers (120) positioniert ist.

3. Kühlschrank nach Anspruch 1 oder 2, wobei die schwarze Farbe (A, B) 40% Polyesterharz, 30% Epoxidharz, 20% Bariumfüllstoff und 10% Feldspatfüllstoff umfasst.

4. Kühlschrank nach einem der Ansprüche 1 bis 3, wobei der überzogene Abschnitt eine Dicke von 40 - 60 µm hat.

5. Kühlschrank nach einem der Ansprüche 1 bis 4, wobei der überzogene Abschnitt eine Dicke von 50 µm hat.

6. Kühlschrank nach einem der Ansprüche 1 bis 5, wobei der kalte Stift (42) aus einem vertikalen Teil in engem Kontakt mit der Außenseite des Verdampferrahmens (125) und einem horizontalen Teil, der sich entlang der Unterseite des Verdampfers (120) erstreckt, zusammengesetzt ist.

7. Kühlschrank nach einem der Ansprüche 1 bis 6, wobei die Verdampfungswanne (50) geeignet ist, um einen unteren Abschnitt des Verdampfers (120) aufzunehmen, und der Oberflächenbehandlungsabschnitt (A, B, C, 55) derart angeordnet ist, dass er den kalten Stift (42) auf der linken und/oder rechten Seite der Verdampfungswanne (50) bedcckt.

8. Kühlschrank nach einem der vorhergehenden Ansprüche, wobei wenigstens ein Abschnitt der Verdampfungswanne (50), der den Oberflächenbehandlungsabschnitt (A, B, C, 55) umfasst, aus Aluminium hergestellt ist.

9. Kühlschrank nach einem der vorhergehenden Ansprüche, wobei der Oberflächenbehandlungsabschnitt (A, B, C, 55) rauer als die andere Innenseite der Verdampfungswanne (50) ist.

10. Kühlschrank nach Anspruch 1, wobei der eloxierte Abschnitt (C) eine rauere Oberfläche als die andere Innenseite der Verdampfungswanne (50) hat.

11. Kühlschrank nach Anspruch 1, wobei der wärmeabsorbierende Block (55) in einer Form ausgebildet ist, welche der Verdampfungswanne (50) entspricht und an der Verdampfungswanne (50) befestigt ist.

12. Kühlschrank nach Anspruch 1, wobei der wärmeabsorbierende Block (55) in einem Bereich ausgebildet ist, der dem kalten Stift (42) der Mantelheizung (40) entspricht, entlang Seitenwänden (52, 53), welche die linke und rechte Seite der Verdampfungswanne (50) bilden, ein Abtauwassersammelabschnitt (51) einen Boden der Verdampfungswanne (50) bildet, und eine Rückwand (54) ein Hinterteil der Verdampfungswanne (50) hält.

13. Kühlschrank nach Anspruch 12, wobei der wärmeabsorbierende Block (55) entlang der Innenseite der Verdampfungswanne (50) ausgebildet ist, um den kalten Stift (42) der Mantelheizung (40) aufzunehmen.

## Revendications

1. Réfrigérateur comprenant :
une carcasse (11) qui comprend des compartiments de stockage (102, 104) pour conserver de la nourriture et une chambre d'évaporation pour produire de l'air froid ;
des portes (12, 13) qui sont couplées à la carcasse afin d'ouvrir et de fermer les compartiments de stockage (102, 104) ; et
un évaporateur (120) qui comprend une unité d'évaporation pour l'évaporation, l'unité d'évaporation comprenant un tuyau d'évaporateur (121), un bâti (125) supportant le tuyau d'évaporateur et une pluralité d'ailettes d'échangeur de chaleur (123) à travers lesquelles le tuyau d'évaporateur passe ;
un dispositif de chauffage de cordon en L (30) qui est disposé sur l'évaporateur (120), un dispositif de chauffage de gaine (40) qui est disposé sous l'évaporateur (120) ;
un capteur de température (60) qui est monté sur l'évaporateur (120) ;
un bac d'évaporation (50) qui est disposé sous l'évaporateur (120) et configuré pour collecter et décharger l'eau ou la glace qui tombe de l'évaporateur (120), dans lequel le dispositif de chauffage de gaine (40) comprend : un fil conducteur (41) ;
une broche froide (42) qui a une première extrémité raccordée à l'extrémité du fil conducteur (41) et prévue pour empêcher la fusion d'un revêtement du fil conducteur (41) à une chaleur à haute température provenant d'un fil de chauffage (43) ;
le fil de chauffage (43) raccordé à une seconde extrémité de la broche froide (42) ;
un tuyau de chauffage (44) qui a la broche froide (42) et le fil de chauffage (43) à l'intérieur de ce dernier ; et
un tube de contraction thermique (45) qui recouvre la partie d'extrémité du tuyau de chauffage (44) ;
**caractérisé en ce que** :
une partie de traitement de surface (A, B, C, 55) pour absorber la chaleur radiante provenant du dispositif de chauffage de gaine (40), est formée sur le côté interne du bac d'évaporation (50) qui correspond à au moins une zone sous la broche froide (42), et
dans lequel la partie de traitement de surface (A, B, C, 55) comprend l'un quelconque parmi une partie recouverte avec de la peinture noire (A, B), un coussinet d'absorption de chaleur (55), et une partie anodisée (C).

2. Réfrigérateur selon la revendication 1, dans lequel la broche froide (42) est positionnée sur le bord de l'extrémité inférieure de l'évaporateur (120).

3. Réfrigérateur selon la revendication 1 ou 2, dans lequel la peinture noire (A, B) comprend 40% de résine polyester, 30% de résine époxy, 20% de matière de remplissage à base de baryum et 10% d'une matière de remplissage à base de feldspath.

4. Réfrigérateur selon l'une quelconque des revendications 1 à 3, dans lequel la partie recouverte a une épaisseur de 40 à 60 µm.

5. Réfrigérateur selon l'une quelconque des revendications 1 à 4, dans lequel la partie recouverte a une épaisseur de 50 µm.

6. Réfrigérateur selon l'une quelconque des revendications 1 à 5, dans lequel la broche froide (42) est composée d'une partie verticale en contact immédiat avec le côté externe du bâti d'évaporateur (125) et une partie horizontale étendue le long du fond de l'évaporateur (120).

7. Réfrigérateur selon l'une quelconque des revendications 1 à 6, dans lequel le bac d'évaporation (50) est adapté pour recevoir une partie inférieure de l'évaporateur (120) et la partie de traitement de surface (A, B, C, 55) est disposée pour recouvrir la broche froide (42) au niveau d'au moins l'un parmi le côté gauche et le côté droit du bac d'évaporation (50).

8. Réfrigérateur selon l'une quelconque des revendications précédentes, dans lequel au moins une partie du bac d'évaporation (50) comprenant la partie de traitement de surface (A, B, C, 55) est réalisée à partir d'aluminium.

9. Réfrigérateur selon l'une quelconque des revendications précédentes, dans lequel la partie de traitement de surface (A, B, C, 55) est plus rugueuse que l'autre côté interne du bac d'évaporation (50).

10. Réfrigérateur selon la revendication 1, dans lequel la partie anodisée (C) a une surface plus rugueuse que l'autre côté interne du bac d'évaporation (50).

11. Réfrigérateur selon la revendication 1, dans lequel le coussinet d'absorption de chaleur (55) est formé selon une forme correspondant au bac d'évaporation (50) et fixée au bac d'évaporation (50).

12. Réfrigérateur selon la revendication 1, dans lequel le coussinet d'absorption de chaleur (55) est formé au niveau d'une zone correspondant à la broche froide (42) du dispositif de chauffage de gaine (40), le long des parois latérales (52, 53) formant les côtés droit et gauche du bac d'évaporation (50), une partie de collecte d'eau de dégivrage (51) formant un fond du bac d'évaporation (50) et une paroi arrière (54) supportant une partie arrière du bac d'évaporation (50).

13. Réfrigérateur selon la revendication 12, dans lequel le coussinet d'absorption de chaleur (55) est formé le long du côté interne du bac d'évaporation (50) afin de recevoir la broche froide (42) du dispositif de chauffage de gaine (40).
